# EUROPEAN PATENT APPLICATION

(11) **EP 2 950 250 A1**
(43) Date of publication of application: **02.12.2015**
(21) Application number: 15170001.0
(22) Date of filing: 29.05.2015
(51) Int. Cl.: G06Q 10/06

(54) **SYSTEM AND METHOD FOR PROVIDING AN OPTIMIZED AIRCRAFT TURNAROUND SCHEDULE**

(30) Priority: 30.05.2014 IN CH26692014
(71) Applicant: Airbus Group India Private Limited, Karnataka, Bangalore (IN); Airbus S.A.S., 31707 Biagnac Cedex, Toulouse (FR)
(72) Inventor: Agrawal, Ashutosh, Bangalore (IN); Gowda, Netra, Toulouse (FR)
(74) Representative: Pearson, James Ginn

(57) **Abstract**

A system and method for providing an aircraft turnaround schedule are disclosed. In one embodiment, a time taken for each aircraft turnaround activity is obtained from touchdown to takeoff of an aircraft from an aircraft on-board system by a ground station system. Further, the aircraft turnaround schedule is computed based on the obtained time taken for each aircraft turnaround activity using a dynamic buffer management approach by the ground station system.

## Description

### TECHNICAL FIELD

Embodiments of the present subject matter generally relate to aircraft turnaround, and more particularly, to providing an optimized aircraft turnaround schedule.

### BACKGROUND

Typically, airlines focus on minimizing turnaround time during whole journey of an aircraft. In order to minimize the aircraft turnaround time, existing methods may rely on data obtained from airline operators and/or ground handlers who monitor aircraft turnaround activities from touchdown to takeoff of the aircraft. The airlines and the ground handlers may be concerned about optimising their operations and meeting quality of service (QoS). Current methods provide buffers in the aircraft turnaround schedule using the data obtained based on the experience of the ground handlers and/or the airlines. However, the buffers created using this data may lead to higher aircraft turnaround times than the minimum prescribed time. Further, the existing methods are airport centric methods deployed at airports and hence may not monitor aircraft turnaround time throughout the journey of the aircraft.

### SUMMARY

A system and method for providing an optimized aircraft turnaround schedule are disclosed. According to one aspect of the present subject matter, a time taken for each aircraft turnaround activity is obtained from touchdown to takeoff of an aircraft from an aircraft on-board system by a ground station system. Further, the optimized aircraft turnaround schedule is computed based on the obtained time taken for each aircraft turnaround activity using a dynamic buffer management approach by the ground station system.

According to another aspect of the present subject matter, the system includes an aircraft on-board system and a ground station system communicatively coupled to the aircraft on-board system via a communication network. Further, the ground station system includes a processor and memory coupled to the processor. Furthermore, the ground station system includes an aircraft turnaround optimizer residing in the memory. In one embodiment, the aircraft turnaround optimizer obtains time taken for each aircraft turnaround activity from touchdown to takeoff of the aircraft from the aircraft on-board system. Further, the aircraft turnaround optimizer computes the optimized aircraft turnaround schedule based on the obtained time taken for each aircraft turnaround activity using a dynamic buffer management approach.

According to yet another aspect of the present subject matter, a non-transitory computer-readable storage medium for providing an optimized aircraft turnaround schedule, having instructions that, when executed by a computing device causes the computing device to perform the method described above.

The system and method disclosed herein may be implemented in any means for achieving various aspects. Other features will be apparent from the accompanying drawings and from the detailed description that follow.

### BRIEF DESCRIPTION OF THE DRAWINGS

Various embodiments are described herein with reference to the drawings, wherein:
**FIG. 1** illustrates a flow diagram of an exemplary method for providing an optimized aircraft turnaround schedule, according to one embodiment;
**FIG. 2** illustrates a schematic of a system for providing the optimized aircraft turnaround schedule, according to one embodiment;
**FIG. 3** illustrates a functional architecture of an aircraft turnaround optimizer in a ground station system for providing the optimized aircraft turnaround schedule, using the method described with reference to **FIG. 1****,** according to one embodiment;
**FIG. 4** illustrates a schematic illustrating an aircraft centric view of journey of an aircraft, according to one embodiment;
**FIG. 5** illustrates a schematic of exemplary aircraft turnaround activities scheduled from touchdown to takeoff of the aircraft, according to one embodiment; and
**FIG. 6** illustrates a passenger interface for providing alerts to passengers of the aircraft, according to one embodiment.

The drawings described herein are for illustration purposes only and are not intended to limit the scope of the present disclosure in any way.

### DETAILED DESCRIPTION

A system and method for providing an optimized aircraft turnaround schedule are disclosed. In the following detailed description of the embodiments of the present subject matter, references are made to the accompanying drawings that form a part hereof, and in which are shown by way of illustration specific embodiments in which the present subject matter may be practiced. These embodiments are described in sufficient detail to enable those skilled in the art to practice the present subject matter, and it is to be understood that other embodiments may be utilized and that changes may be made without departing from the scope of the present subject matter. The following detailed description is, therefore, not to be taken in a limiting sense, and the scope of the present subject matter is defined by the appended claims.

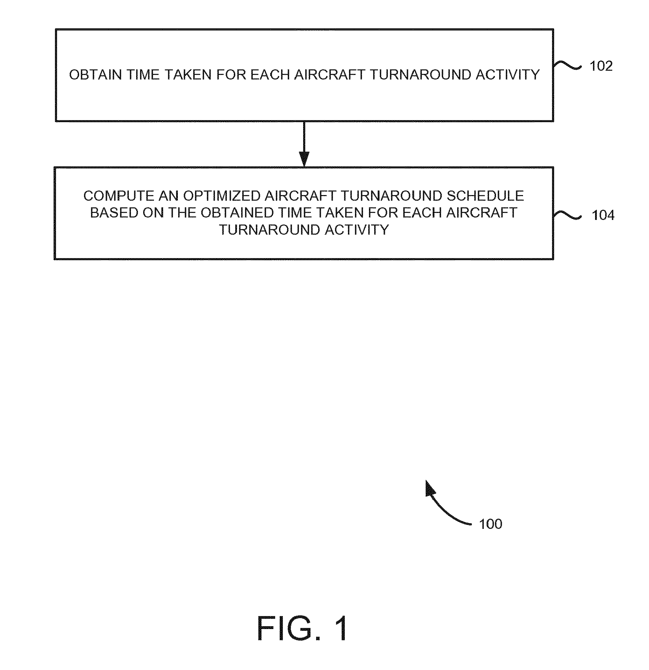

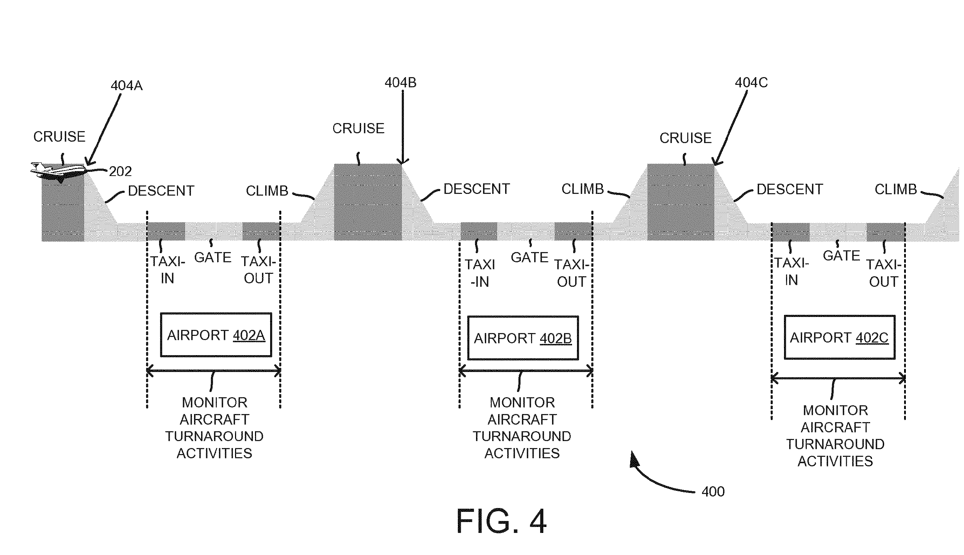

**FIG. 1** illustrates a flow diagram 100 of an exemplary method for providing an optimized aircraft turnaround schedule, according to one embodiment. At step 102, time taken for each aircraft turnaround activity from touchdown to takeoff of an aircraft is obtained from an aircraft on-board system by a ground station system. For example, aircraft turnaround activities include ground handling activities and aircraft activities. Exemplary ground handling activities include refueling, cargo door open, cargo door close, toilet drain cycle, portable water filling and the like. Exemplary aircraft activities include touchdown, braking start, brake fans start, brake fans stop, braking release, parking brake on, engine stop, aircraft arrival, aircraft docking, aircraft pull away, takeoff braking start, taxi speed reached, engine stop and the like. In one embodiment, the time taken for each aircraft turnaround activity at each airport during journey of the aircraft is obtained by the ground station system. This is explained in detail with reference to **FIG. 4****.**

At step 104, the optimized aircraft turnaround schedule is computed based on the obtained time taken for each aircraft turnaround activity using a dynamic buffer management approach by the ground station system. In one embodiment, an additional buffer time involved in each aircraft turnaround activity is determined based on the obtained time taken for each aircraft turnaround activity by the ground station system. Further, the determined additional buffer time involved in each aircraft turnaround activity is aggregated by the ground station system. Furthermore, the optimized aircraft turnaround schedule is computed by scheduling the aircraft turnaround activities along with the aggregated additional buffer time based on the time taken for each aircraft turnaround activity by the ground station system.

Further in this embodiment, the computed optimized aircraft turnaround schedule is sent to the aircraft on-board system by the ground station system. Furthermore, a consumption of the aggregated additional buffer time in the optimized aircraft turnaround schedule is dynamically determined based on the obtained time taken for each aircraft turnaround activity by the ground station system. For example, the aircraft turnaround schedule is provided to one or more ground handling units by the aircraft on-board system prior to landing. Further, the aircraft on-board system monitors time taken for each aircraft turnaround activity and sends the monitored time taken to the ground station system, in real-time. This is explained in detail with reference to **FIG. 4****.** Based on the obtained time taken, the ground station system determines the consumption of the aggregated additional buffer time.

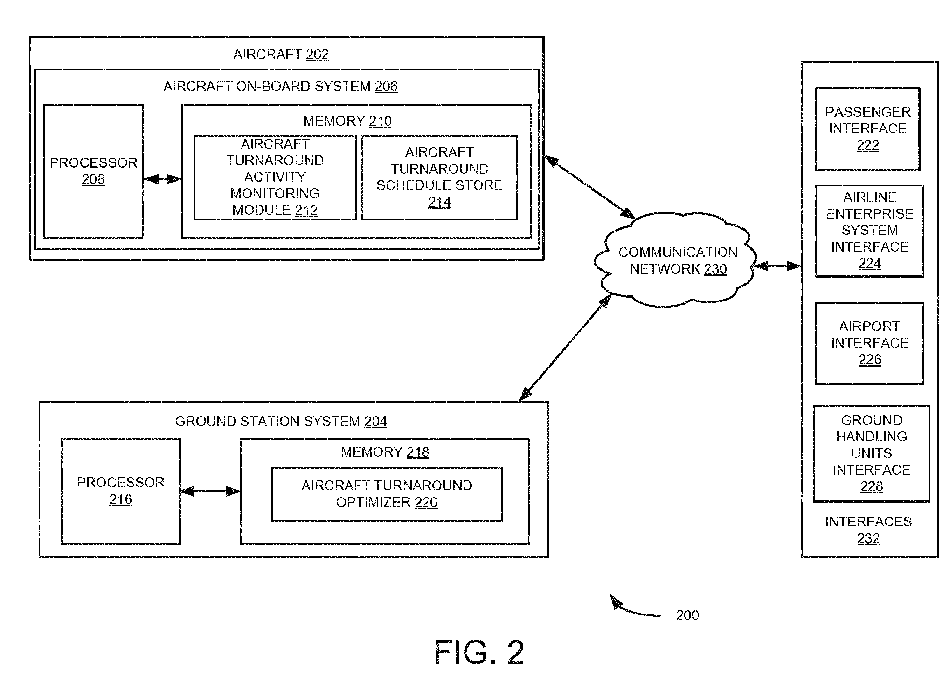

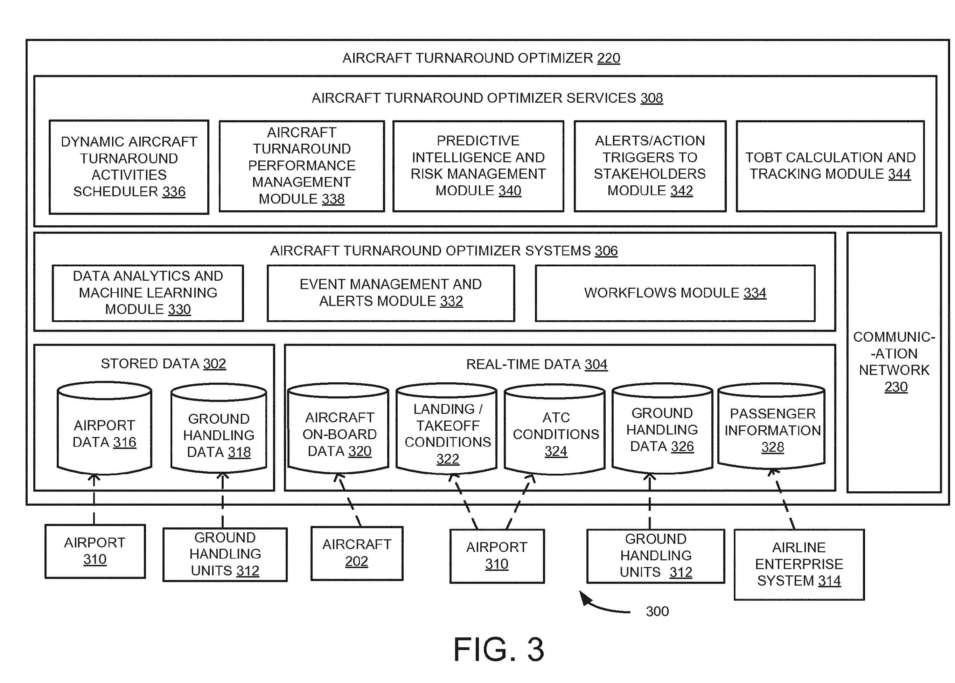

In addition, one or more aircraft turnaround activities in the optimized aircraft turnaround schedule that consume the aggregated additional buffer time are identified by the ground station system. Moreover, an alert is sent to one or more ground handling units associated with the one or more aircraft turnaround activities that consume the aggregated additional buffer time by the ground station system. Also, the steps of dynamically determining, identifying and sending are repeated for each aircraft turnaround in the journey of the aircraft. In addition, the one or more aircraft turnaround activities that consume the aggregated additional buffer time are analyzed to improve process of performing the one or more aircraft turnaround activities for subsequent turnarounds of the aircraft. This is explained in detail with reference to **FIGS. 2** and **3****.**

Further, a target off-block time (TOBT) for the aircraft is estimated based on an estimated time of arrival (ETA) and the optimized aircraft turnaround schedule, prior to landing of the aircraft, by the ground station system. Furthermore, the estimated TOBT is dynamically revised based on the actual time of arrival of the aircraft and progress of the optimized aircraft turnaround schedule after arrival of the aircraft by the ground station system. Also, the airport is alerted based on the revised TOBT by the ground station system. This is explained in detail with reference to **FIG. 3****.**

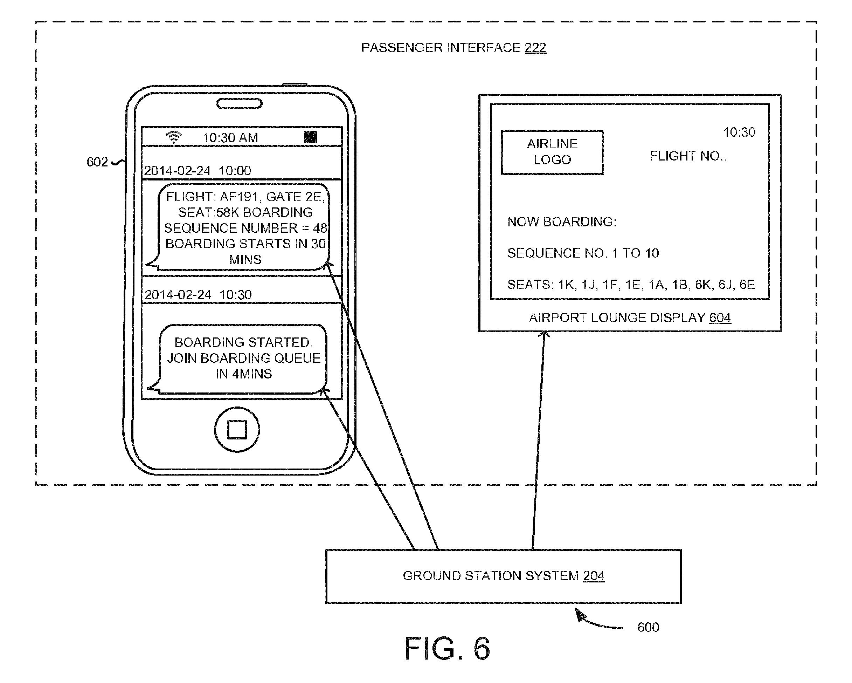

In one example, a passenger interface is provided to passengers of the aircraft based on the computed optimized aircraft turnaround schedule. The passenger interface includes a gate number, a sequence number for boarding the aircraft and a time of boarding the aircraft. This is explained in detail with reference to **FIG. 6****.**

Referring now to **FIG. 2****,** which illustrates a schematic of a system 200 for providing an optimized aircraft turnaround schedule, according to one embodiment. As shown in **FIG. 2****,** the system 200 includes an aircraft 202, a ground station system 204 and interfaces 232. Further as shown in **FIG. 2****,** the aircraft 202 includes an aircraft on-board system 206. Furthermore as shown in **FIG. 2****,** the aircraft on-board system 206 includes a processor 208 and memory 210. In addition as shown in **FIG. 2****,** the memory 210 includes an aircraft turnaround activity monitoring module 212 and an aircraft turnaround schedule store 214.

Moreover as shown in **FIG. 2****,** the ground station system 204 includes a processor 216 and memory 218. Also as shown in **FIG. 2****,** the memory 218 includes an aircraft turnaround optimizer 220. In addition as shown in **FIG. 2****,** the interfaces 232 include a passenger interface 222, an airline enterprise system interface 224, an airport interface 226 and a ground handling units interface 228.

Further as shown in **FIG. 2****,** the ground station system 204 is coupled to the interfaces 232 and the aircraft 202 via a communication network 230. Exemplary communication network 230 includes an Internet, an airport Wi-Fi, a mobile network, an in-flight Internet and the like.

In operation, the aircraft turnaround activity monitoring module 212 monitors time taken for each aircraft turnaround activity from touchdown to takeoff of the aircraft 202. For example, aircraft turnaround activities include ground handling activities and aircraft activities. Exemplary ground handling activities include refueling, cargo door open, cargo door close, toilet drain cycle, portable water filling and the like. Exemplary aircraft activities touchdown, braking start, brake fans start, brake fans stop, braking release, parking brake on, engine stop, aircraft arrival, aircraft docking, aircraft pull away, takeoff braking start, taxi speed reached, engine stop and the like. In one example, the aircraft turnaround activity monitoring module 212 monitors time taken for each aircraft turnaround activity using aircraft systems, such as aircraft condition monitoring system (ACMS), cabin intercommunication data system (CIDS) and cabin video monitoring system (CVMS) and the like.

In one embodiment, the aircraft turnaround optimizer 220 obtains the time taken for each aircraft turnaround activity from the aircraft turnaround activity monitoring module 212. For example, the aircraft turnaround optimizer 220 obtains the time taken for each aircraft turnaround activity at each airport during the journey of the aircraft 202 via the communication network 230. This is explained in detail with reference to **FIG. 4****.**

Further in this embodiment, the aircraft turnaround optimizer 220 computes the optimized aircraft turnaround schedule based on the obtained time taken for each aircraft turnaround activity using a dynamic buffer management approach. In the dynamic buffer management approach, the aircraft turnaround optimizer 220 determines an additional buffer time involved in each aircraft turnaround activity based on the obtained time taken for each aircraft turnaround activity monitored by the aircraft on-board system 206. For example, the additional buffer time is a difference between a time allotted for each aircraft turnaround activity and the time taken for each aircraft turnaround activity obtained from the aircraft on-board system 206, from touchdown to takeoff of the aircraft 202. The time allotted for each aircraft turnaround activity is based on inputs obtained from ground handling personals.

Further, the aircraft turnaround optimizer 220 aggregates the determined additional buffer time involved in each aircraft turnaround activity. Furthermore, the aircraft turnaround optimizer 220 computes the optimized aircraft turnaround schedule by scheduling the aircraft turnaround activities along with the aggregated additional buffer time based on the time taken for each aircraft turnaround activity.

Furthermore in this embodiment, the aircraft turnaround optimizer 220 sends the computed optimized aircraft turnaround schedule to the aircraft turnaround schedule store 214. After landing of the aircraft 202, the aircraft turnaround optimizer 220 dynamically determines a consumption of the aggregated additional buffer time in the optimized aircraft turnaround schedule based on the obtained time taken for each aircraft turnaround activity. For example, the aircraft turnaround schedule is provided to one or more ground handling units by the aircraft on-board system 206 prior to landing. Further, the aircraft on-board system 206 monitors time taken for each aircraft turnaround activity and sends the monitored time taken to the ground station system 204, in real-time. Based on the obtained time taken, the ground station system 204 determines the consumption of the aggregated additional buffer time.

In addition in this embodiment, the aircraft turnaround optimizer 220 identifies one or more aircraft turnaround activities in the optimized aircraft turnaround schedule that consume the aggregated additional buffer time. Also, the aircraft turnaround optimizer 220 sends alerts to one or more ground handling units associated with the one or more aircraft turnaround activities that consume the aggregated additional buffer time. For example, aircraft turnaround optimizer 220 sends alerts to one or more ground handling units associated with the one or more aircraft turnaround activities via the ground handling units interface 228. Moreover in this embodiment, the aircraft turnaround optimizer 220 repeats the steps of dynamically determining the consumption of the aggregated additional buffer time, identifying one or more aircraft turnaround activities and sending the alerts for each aircraft turnaround in the journey of the aircraft. Also, the aircraft turnaround optimizer 220 analyzes the one or more aircraft turnaround activities that consume the aggregated additional buffer time to improve process of performing the one or more aircraft turnaround activities for subsequent turnarounds of the aircraft. This is explained in detail with reference to **FIG. 3****.**

Also in this embodiment, the aircraft turnaround optimizer 220 estimates a TOBT for the aircraft 202 based on the optimized aircraft turnaround schedule. The TOBT is the time when the aircraft 202 will be ready for takeoff upon receiving clearance from the airport. This is explained in detail with reference to **FIG. 3****.**

In one example, prior to landing of the aircraft 202, the aircraft on-board system 206 provides the optimized aircraft turnaround schedule to one or more ground handling units via the ground handling units interface 228. Exemplary ground handling units interface 228 include a display of a computing system. Further, the aircraft on-board system 206 sends alerts to the one or more ground handling units based on the progress of the aircraft turnaround schedule. This is explained in detail with reference to **FIG. 3****.**

In another example, the aircraft turnaround optimizer 220 provides the passenger interface 222 to the passengers of the aircraft 202 based on the computed optimized aircraft turnaround schedule. The passenger interface 222 includes a gate number, a sequence number for boarding the aircraft and a time of boarding the aircraft are provided to passengers of the aircraft. For example, the passenger interface 222 is displayed to the passengers on a mobile device, computing device and/or an aircraft lounge display. This is explained in detail with reference to **FIG. 6****.**

In yet another example, the aircraft turnaround optimizer 220 analyzes the time taken for each aircraft turnaround activity to measure performance of ground handling activities, performance of aircraft crew, phase of ground handling units and so on. Further, the aircraft turnaround optimizer 220 sends the analyzed data to the airline enterprise system interface 224 and the airport interface 226. This is explained in detail with reference to **FIG. 3****.**

In one embodiment, an article comprising a non-transitory computer readable storage medium having instructions thereon which when executed by a computing platform result in execution of the above mentioned method. The method described in the foregoing may be in a form of a machine-readable medium embodying a set of instructions that, when executed by a machine, causes the machine to perform any method disclosed herein. It will be appreciated that the various embodiments discussed herein may not be the same embodiment, and may be grouped into various other embodiments not explicitly disclosed herein. Each of the aircraft turnaround activity monitoring module 212 and the aircraft turnaround optimizer 220 represent any combination of circuitry and executable instructions to perform the above described systems and methods.

Referring now to **FIG. 3****,** which illustrates a functional architecture 300 of the aircraft turnaround optimizer 220 in the ground station system 204 for providing the optimized aircraft turnaround schedule, using the method described with reference to **FIG. 1****,** according to one embodiment. As shown in **FIG. 3****,** the functional architecture 300 includes stored data 302, real-time data 304, aircraft turnaround optimizer systems 306 and aircraft turnaround optimizer services 308. Further as shown in **FIG. 3****,** the stored data 302 includes airport data 316 and ground handling data 318. Furthermore as shown in **FIG. 3****,** the real-time data 304 includes aircraft on-board data 320, landing/ takeoff conditions 322, air traffic controller (ATC) conditions 324, ground handling data 326 and passenger information 328.

In addition as shown in **FIG. 3****,** the aircraft turnaround optimizer systems 306 include a data analytics and machine learning module 330, an event management and alerts module 332 and a workflows module 334. Moreover as shown in **FIG. 3****,** the aircraft turnaround optimizer services 308 include dynamic aircraft turnaround activities scheduler 336, an aircraft turnaround performance management module 338, a predictive intelligence and risk management module 340, an alerts/action triggers to stakeholders module 342 and a TOBT calculation and tracking module 344.

Also as shown in **FIG. 3****,** an airport 310 and ground handling units 312 are communicatively coupled to the airport data 316 and the ground handling data 318, respectively. Moreover as shown in **FIG. 3****,** the aircraft 202, the ground handling units 312 and an airline enterprise system 314 are communicatively coupled to the aircraft on-board data 320, the ground handling data 326 and the passenger information 328, respectively. Further as shown in **FIG. 3****,** the airport 310 is communicatively coupled to the landing/ takeoff conditions 322 and the ATC conditions 324. Exemplary communication network 230 includes Internet, an airport Wi-Fi, a mobile network, in-flight Internet and the like.

In one example, the airport data 316 includes a terminal number, a gate number, an exit gate number and so on obtained from the airport 310. Further, the ground handling data 318 includes type of ground handling units, number of ground handling units and so on obtained from ground handling units 312. Furthermore, the landing/ takeoff conditions 322 include weather, runway conditions and so on obtained from the airport 310. In addition, the ATC conditions 324 includes available slots, allocated gates and so on obtained the airport 310. Also, the ground handling data 326 includes schedule, available ground handling units and so on obtained from the ground handling units 312. Moreover, the passenger information 328 includes number of passengers, baggage weight, special cases and so on obtained from the airline enterprise system 314.

Further in this example, the aircraft on-board data 320 obtained from the aircraft 202 includes time taken for aircraft turnaround activities, such as touchdown, braking start, taxi speed reached, brake fans start, brake fans stop, braking release, parking brake on, APU start/GPU connect, engine stop, skybridge/ ladder connect, passenger doors open, first passenger de-boarding (obtained from cabin video feed), last passenger de-boarding (obtained from cabin video feed), cleaning finish, first passenger boarding (obtained from cabin video feed), last passenger boarding (obtained from cabin video feed), passenger door closed, forward cargo door open, rear end cargo door open, forward cargo door close, rear end cargo door close, refueling start, refueling stop, catering door open, catering door closed, portable water filling start, portable water filling stop, toilet drain cycle start, toilet drain cycle stop, maintenance activity start, maintenance activity stop, parking brake release, engine start, APU/GPU stop, pushback start, brake fans start, brake fans stop, temporary stops during taxi, brake on, throttle takeoff setting and the like.

In operation, the data analytics and machine learning module 330 determines the additional buffer time involved in each aircraft turnaround activity based on the time taken for each aircraft turnaround activity monitored by the aircraft on-board system 206. Further, the data analytics and machine learning module 330 aggregates the determined additional buffer time involved in each aircraft turnaround activity. Furthermore, the dynamic aircraft turnaround activities scheduler 336 computes the optimized aircraft turnaround schedule by scheduling the aircraft turnaround activities along with the aggregated additional buffer time based on the time taken for each aircraft turnaround activity. In addition, the workflows module 334 sends alerts to the ground handling units 312 based on the optimized aircraft turnaround schedule. For example, based on the optimized aircraft turnaround schedule, the workflows module 334 sends a start time of each aircraft turnaround activity to associated ground handling units.

Furthermore in this embodiment, the dynamic aircraft turnaround activities scheduler 336 sends the computed optimized aircraft turnaround schedule to the aircraft turnaround schedule store 214. After landing of the aircraft 202, the event management and alerts module 332 dynamically determines a consumption of the aggregated additional buffer time in the optimized aircraft turnaround schedule based on the obtained time taken for each aircraft turnaround activity. In other words, an aircraft turnaround activity consumes the aggregated additional buffer time when the aircraft turnaround activity gets delayed or consumes more time than a minimum prescribed time. For example, the aircraft turnaround schedule is provided to one or more ground handling units by the aircraft on-board system 206 prior to landing. Further, the aircraft on-board system 206 monitors time taken for each aircraft turnaround activity and sends the monitored time taken to the ground station system 204, in real-time. Based on the obtained time taken, the event management and alerts module 332 determines the consumption of the aggregated additional buffer time.

Furthermore in operation, the event management and alerts module 332 identifies the one or more aircraft turnaround activities in the aircraft turnaround schedule that consume the aggregated additional buffer time. In addition, the event management and alerts module 332 sends alerts to one or more ground handling units associated with the one or more aircraft turnaround activities that consume the aggregated additional buffer time. Also, the event management and alerts module 332 analyzes the one or more aircraft turnaround activities that consume the aggregated additional buffer time to improve process of performing the one or more aircraft turnaround activities for subsequent turnarounds of the aircraft. For example, the one or more ground handling units 312 may improve the process of performing the aircraft turnaround activity based on the consumption of the aggregated additional buffer time.

In addition in operation, the aircraft turnaround performance management module 338 measures performance of the ground handling activities, the performance of aircraft crew, the phase of ground handling units and so on. Furthermore, the aircraft turnaround performance management module 338 represents the analyzed data in the form of graphs, charts and the like. Also, the aircraft turnaround performance management module 338 sends the graphs, charts and the like to the airline enterprise system 314 and the airport 310. For example, the airline enterprise system 314 may use the analyzed data to determine taxi-in performance of the aircraft 202 in the airport 310.

Moreover in operation, the predictive intelligence and risk management module 340 analyzes the effect of any delays caused by one or more aircraft turnaround activities on the aircraft turnaround schedule. Based on the analysis, the alerts/action triggers to stakeholders module 342 sends alerts to the passengers of the aircraft 202. This is explained in detail with reference to FIG. 6.

Moreover in operation, the TOBT calculation and tracking module 344 estimates a TOBT for the aircraft 202 based on the ETA of the aircraft 202 and the optimized aircraft turnaround schedule. For example, the ETA of the aircraft is obtained from the aircraft 202. Further, the TOBT calculation and tracking module 344 dynamically revises the estimated TOBT for the aircraft based on the actual time of arrival of the aircraft and the progress of the optimized aircraft turnaround schedule after arrival of the aircraft 202. For example, if the ETA of the aircraft changes more than a predefined minimum time or if a delay is predicted in the aircraft turnaround schedule, then the ETA is revised based on the change. Furthermore, the TOBT calculation and tracking module 344 alerts the airport 310 based on the revised TOBT using the event management and alerts module 332.

In one example, the airport 310 uses the estimated TOBT for gate allocation and departure planning of the aircraft 202. If the estimated TOBT is revised due to delay in the aircraft turnaround schedule, the TOBT calculation and tracking module 344 alerts the associated ground handling units based on the delay. Upon receiving the alert, the associated ground handling units may attempt to recover the delay. Further, the airline enterprise system 314 uses the revised TOBT to coordinate airline crew activities and airline operations. Furthermore, the airport 310 uses the revised TOBT for revising the gate allocation and departure planning for the aircraft 202.

Referring now to **FIG. 4****,** which illustrates a schematic 400 illustrating an aircraft centric view of journey of the aircraft 202, according to one embodiment. The schematic 400 illustrates the journey of the aircraft 202 through airports 402A- 402C. Further, the schematic 400 illustrates different phases of the aircraft 202, such as cruise, descent, taxi-in, at gate, taxi-out and climb phases of the aircraft 202 at the each of the airports 402A- 402C. Furthermore, 4040A- 404C indicate locations in the journey of the aircraft 202 when the aircraft 202 sends the optimized aircraft turnaround schedule to one or more ground handling units associated with the airports 402A- 402C, respectively.

In one embodiment, prior to landing of the aircraft 202, at location 404A, the aircraft 202 sends the optimized aircraft turnaround schedule to one or more ground handling units in the airport 402A. For example, the optimized aircraft turnaround schedule may be sent 30 minutes prior to landing of the aircraft 202. The optimized aircraft turnaround schedule is computed by the aircraft turnaround optimizer 220, shown in **FIG. 2****,** based on the historical data monitored by the aircraft 202.

After arrival of the aircraft 202 in the airport 402A, the aircraft 202 monitors the time taken for each aircraft turnaround activity and sends the monitored data to the aircraft turnaround optimizer 220 in real-time. The aircraft turnaround optimizer 220 then updates the aircraft turnaround schedule based on the monitored time taken for each aircraft turnaround activity at the airport 402A.

Similarly, at the airports 402B and 402C, the aircraft 202 monitors the time taken for each aircraft turnaround activity. Further, the aircraft turnaround optimizer 220 updates the aircraft turnaround schedule based on the monitored time taken for each aircraft turnaround activity at each of the airport 402A- 402C. Furthermore, the aircraft turnaround optimizer 220 determines a consumption of the aggregated buffer time, identifies the one or more aircraft turnaround activities consuming the aggregated buffer time and sends alerts to one or more ground handling units associated with the identified one or more aircraft turnaround activities at each of the airports 402A- 402C.

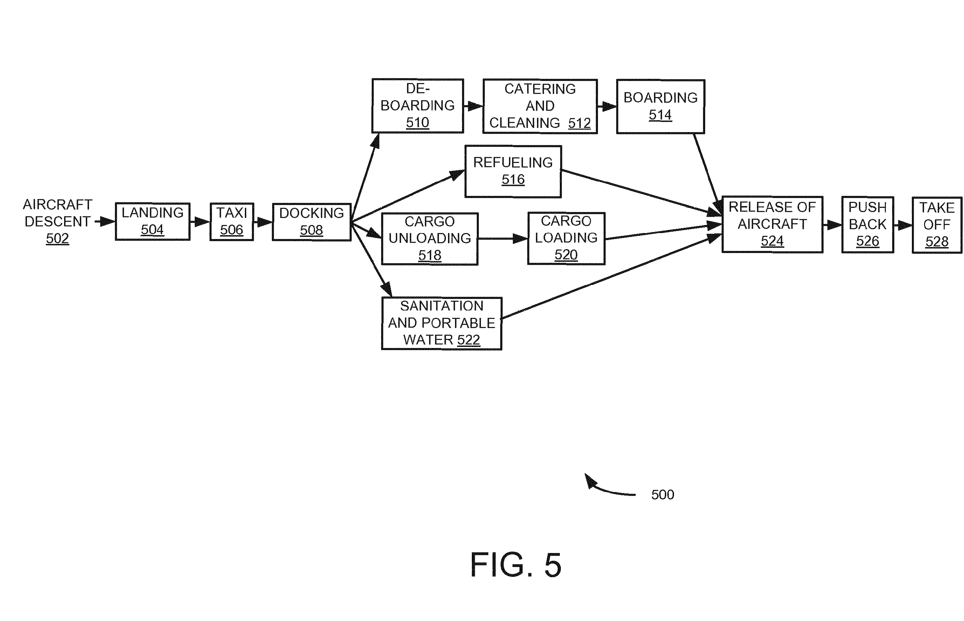

Referring now to **FIG. 5****,** which illustrates a schematic illustrating exemplary aircraft turnaround activities scheduled from touchdown to takeoff of the aircraft 202, according to one embodiment. As shown in **FIG. 5****,** the aircraft turnaround activities include an aircraft descent 502, landing 504, taxi 506, docking 508, de-boarding 510, catering and cleaning 512, boarding 514, refueling 516, cargo unloading 518, cargo loading 520, sanitation and portable water 522, release of aircraft 524, push back 526 and takeoff 528.

As shown in **FIG. 5****,** the aircraft turnaround activities, such as landing 504, taxi 506 and docking 508 are scheduled in series after the aircraft descent 502. Further as shown in **FIG. 5****,** the aircraft turnaround activities, such as de-boarding 510, cargo unloading 518, and sanitation and portable water 522 are scheduled in parallel. For example, the de-boarding 510, the cargo unloading 518, and the sanitation and portable water 522 are performed by different ground handling units and hence may be performed in parallel. Furthermore as shown in **FIG. 5****,** the refueling 516 is performed after the de-boarding 510 is completed. In addition as shown in **FIG. 5****,** the aircraft turnaround activities, such as catering and cleaning 512 and boarding 514 are scheduled in series after de-boarding 510. In addition as shown in **FIG. 5****,** cargo loading 520 is scheduled after cargo unloading 518. Moreover as shown in **FIG. 5****,** after the completion of the aircraft turnaround activities, such as boarding 514, refueling 516, cargo loading 520 and sanitation and portable water 522, the release of the aircraft 524 is scheduled. Also as shown in **FIG. 5****,** after the release of the aircraft 524, the push back 526 and take off 528 are scheduled. Similarly, all other aircraft turnaround activities are scheduled based on the time taken for each aircraft turnaround activity, ground handling units used for performing the aircraft turnaround activity and availability of ground handling units to perform the aircraft turnaround activity.

Referring now to **FIG. 6****,** which is a schematic 600 illustrating the passenger interface 222 for providing alerts to passengers of the aircraft 202, according to one embodiment. As shown in **FIG. 6****,** the schematic 600 includes the passenger interface 222 and the ground station system 204. Further as shown in **FIG. 6****,** the passenger interface 222 includes a mobile phone 602 and an airport lounge display 604. Furthermore as shown in **FIG. 6****,** the ground station system 204 is communicatively coupled to the passenger interface 222.

In one embodiment, the ground station system 204 provides the passenger interface 222 to the passengers of the aircraft 202 based on the computed optimized aircraft turnaround schedule. The passenger interface 222 includes a gate number, a sequence number for boarding the aircraft and a time for boarding the aircraft to the passengers of the aircraft. For example, based on historical data of an aircraft and an airport, the ground station system 204 computes a rate of boarding the passengers of the aircraft. Based on the rate of boarding the passengers computed and the progress of the aircraft turnaround activities, the ground station system 204 computes a time of boarding the passengers for each sequence number.

As shown in **FIG. 6****,** the ground station system 204 sends an alert to the mobile phone 602 including a flight number, a gate number, a seat number, a boarding sequence number and a boarding start time. For example, the ground station system 204 sends an alert to the mobile phone 602 via an SMS, an e-mail or a notification. Further, after the boarding starts, the ground station system 204 sends another alert to the mobile phone 602 including a time for joining the boarding queue. Furthermore as shown in **FIG. 6****,** the ground station system 204 also sends an alert to the airport lounge display 604 including the flight number, an airline logo, sequence numbers and seat numbers of passengers boarding the aircraft.

Although the present embodiments have been described with reference to specific example embodiments, it will be evident that various modifications and changes may be made to these embodiments without departing from the broader spirit and scope of the various embodiments. Furthermore, the various devices, modules, analyzers, generators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

Aspects of the invention may be as set out in the following clauses:
1. A method for providing an aircraft turnaround schedule, comprising:
   obtaining time taken for each aircraft turnaround activity from touchdown to takeoff of an aircraft from an aircraft on-board system by a ground station system; and
   computing the aircraft turnaround schedule based on the obtained time taken for each aircraft turnaround activity using a dynamic buffer management approach by the ground station system.
2. The method of clause 1, wherein the time taken for each aircraft turnaround activity at each airport during journey of the aircraft is obtained by the ground station system.
3. The method of clause 1, wherein computing the aircraft turnaround schedule based on the obtained time taken for each aircraft turnaround activity using the dynamic buffer management approach by the ground station system comprises:
   determining an additional buffer time involved in each aircraft turnaround activity based on the obtained time taken for each aircraft turnaround activity by the ground station system;
   aggregating the determined additional buffer time involved in each aircraft turnaround activity by the ground station system; and
   computing the aircraft turnaround schedule by scheduling aircraft turnaround activities along with the aggregated additional buffer time based on the time taken for each aircraft turnaround activity by the ground station system.
4. The method of clause 3, further comprising:
   sending the computed aircraft turnaround schedule to the aircraft on-board system by the ground station system.
5. The method of clause 4, further comprising:
   dynamically determining a consumption of the aggregated additional buffer time in the aircraft turnaround schedule based on the time taken for each aircraft turnaround activity after landing of the aircraft by the ground station system, wherein the aircraft turnaround schedule is provided to one or more ground handling units by the aircraft on-board system prior to landing;
   identifying one or more aircraft turnaround activities in the aircraft turnaround schedule that consume the aggregated additional buffer time by the ground station system;
   sending an alert to one or more ground handling units associated with one or more aircraft turnaround activities that consume the aggregated additional buffer time by the ground station system; and
   repeating the steps of dynamically determining, identifying and sending for each aircraft turnaround in the journey of the aircraft.
6. The method of clause 5, wherein the one or more aircraft turnaround activities that consume the aggregated additional buffer time are analyzed to improve process of performing the one or more aircraft turnaround activities for subsequent turnarounds of the aircraft.
7. The method of clause 4, further comprising:
   estimating a target off-block time (TOBT) for the aircraft based on an estimated time of arrival and the aircraft turnaround schedule prior to landing of the aircraft by the ground station system;
   dynamically revising the estimated TOBT for the aircraft based on the actual time of arrival of the aircraft and progress of the aircraft turnaround schedule after arrival of the aircraft by the ground station system; and
   alerting the airport based on the revised TOBT by the ground station system.
8. The method of clause 1, wherein the aircraft turnaround activities comprise ground handling activities and aircraft activities, wherein the ground handling activities comprise refueling, cargo door open, cargo door close, toilet drain cycle and portable water filling, and wherein the aircraft activities comprise touchdown, braking start, brake fans start, brake fans stop, braking release, parking brake on, engine stop, aircraft arrival, aircraft docking, aircraft pull away, takeoff braking start, taxi speed reached and engine stop.
9. The method of clause 1, further comprising:
   providing a passenger interface to passengers of the aircraft based on the computed aircraft turnaround schedule, wherein the passenger interface comprises a gate number, a sequence number for boarding the aircraft and a time of boarding the aircraft.
10. A system for providing an aircraft turnaround schedule, comprising:
   an aircraft on-board system; and
   a ground station system communicatively coupled to the aircraft on-board system via a communication network, wherein the ground station system comprises:
      a processor;
      memory coupled to the processor; and
      an aircraft turnaround optimizer residing in the memory, wherein the aircraft turnaround optimizer obtains time taken for each aircraft turnaround activity from touchdown to takeoff of the aircraft from the aircraft on-board system, and wherein the aircraft turnaround optimizer computes the aircraft turnaround schedule based on the obtained time taken for each aircraft turnaround activity using a dynamic buffer management approach.
11. The system of clause 10, wherein the communication network comprises an Internet, an airport Wi-Fi, a mobile network and an in-flight Internet.
12. The system of clause 10, wherein the aircraft turnaround optimizer obtains time taken for each aircraft turnaround activity at each airport during journey of the aircraft.
13. The system of clause 10, wherein the aircraft turnaround optimizer is configured to:
   determine an additional buffer time involved in each aircraft turnaround activity based on the obtained time taken for each aircraft turnaround activity;
   aggregate the determined additional buffer time involved in each aircraft turnaround activity; and
   compute the aircraft turnaround schedule by scheduling aircraft turnaround activities along with the aggregated additional buffer time based on the time taken for each aircraft turnaround activity.
14. The system of clause 13, wherein the aircraft turnaround optimizer sends the computed aircraft turnaround schedule to the aircraft on-board system.
15. The system of clause 14, wherein the aircraft turnaround optimizer is further configured to:
   dynamically determine a consumption of the aggregated additional buffer time in the aircraft turnaround schedule based on the time taken for each aircraft turnaround activity after landing of the aircraft, wherein the aircraft turnaround schedule is provided to one or more ground handling units by the aircraft on-board system prior to landing;
   identify one or more aircraft turnaround activities in the aircraft turnaround schedule that consume the aggregated additional buffer time;
   send an alert to one or more ground handling units associated with one or more aircraft turnaround activities that consume the aggregated additional buffer time; and
   repeating the steps of dynamically determining, identifying and sending for each aircraft turnaround in the journey of the aircraft.
16. The system of clause 15, wherein the aircraft turnaround optimizer is further configured to:
   estimate a target off-block time (TOBT) for the aircraft based on an estimated time of arrival and the aircraft turnaround schedule prior to landing of the aircraft;
   dynamically revise the estimated TOBT for the aircraft based on the actual time of arrival of the aircraft and progress of the aircraft turnaround schedule after arrival of the aircraft; and
   alert the airport based on the revised TOBT.
17. The system of clause 14, wherein the aircraft turnaround optimizer analyzes the one or more aircraft turnaround activities that consume the aggregated additional buffer time to improve process of performing the one or more aircraft turnaround activities for subsequent turnarounds of the aircraft.
18.The system of clause 10, wherein the aircraft turnaround activity comprises ground handler activities and aircraft activities, wherein the ground handler activities comprise refueling, cargo door open, cargo door close, toilet drain cycle and portable water filling, and wherein the aircraft activities comprise touchdown, braking start, brake fans start, brake fans stop, braking release, parking brake on, engine stop, aircraft arrival, aircraft docking, aircraft pull away, takeoff braking start, taxi speed reached and engine stop.
19. The system of clause 10, wherein the aircraft turnaround optimizer provides a passenger interface to passengers of the aircraft based on the computed aircraft turnaround schedule, and wherein the passenger interface comprises a gate number, a sequence number for boarding the aircraft and a time of boarding the aircraft.
20.A non-transitory computer readable storage medium including instructions that are configured, when executed by a computing device, to provide an aircraft turnaround schedule, the method comprising:
   obtaining time taken for each aircraft turnaround activity from touchdown to takeoff of an aircraft from an aircraft on-board system by a ground station system; and
   computing the aircraft turnaround schedule based on the obtained time taken for each aircraft turnaround activity using a dynamic buffer management approach by the ground station system.
21.The non-transitory computer readable storage medium of clause 20, wherein the time taken for each aircraft turnaround activity at each airport during journey of the aircraft is obtained by the ground station system.
22. The non-transitory computer readable storage medium of clause 20, wherein computing the aircraft turnaround schedule based on the obtained time taken for each aircraft turnaround activity using the dynamic buffer management approach by the ground station system comprises:
   determining an additional buffer time involved in each aircraft turnaround activity based on the obtained time taken for each aircraft turnaround activity by the ground station system;
   aggregating the determined additional buffer time involved in each aircraft turnaround activity by the ground station system; and
   computing the aircraft turnaround schedule by scheduling aircraft turnaround activities along with the aggregated additional buffer time based on the time taken for each aircraft turnaround activity by the ground station system.
23. The non-transitory computer readable storage medium of clause 22, further comprising:
   sending the computed aircraft turnaround schedule to the aircraft on-board system by the ground station system.
24. The non-transitory computer readable storage medium of clause 23, further comprising:
   dynamically determining a consumption of the aggregated additional buffer time in the aircraft turnaround schedule based on the time taken for each aircraft turnaround activity after landing of the aircraft by the ground station system, wherein the aircraft turnaround schedule is provided to one or more ground handling units by the aircraft on-board system prior to landing;
   identifying one or more aircraft turnaround activities in the aircraft turnaround schedule that consume the aggregated additional buffer time by the ground station system;
   sending an alert to one or more ground handling units associated with one or more aircraft turnaround activities that consume the aggregated additional buffer time by the ground station system; and
   repeating the steps of dynamically determining, identifying and sending for each aircraft turnaround in the journey of the aircraft.
25. The non-transitory computer readable storage medium of clause 23, further comprising:
   estimating a target off-block time (TOBT) for the aircraft based on an estimated time of arrival and the aircraft turnaround schedule prior to landing of the aircraft by the ground station system;
   dynamically revising the estimated TOBT for the aircraft based on the actual time of arrival of the aircraft and progress of the aircraft turnaround schedule after arrival of the aircraft by the ground station system; and
   alerting the airport based on the revised TOBT by the ground station system.
26. The non-transitory computer readable storage medium of clause 20, wherein the aircraft turnaround activities comprise ground handling activities and aircraft activities, wherein the ground handling activities comprise refueling, cargo door open, cargo door close, toilet drain cycle and portable water filling, and wherein the aircraft activities comprise touchdown, braking start, brake fans start, brake fans stop, braking release, parking brake on, engine stop, aircraft arrival, aircraft docking, aircraft pull away, takeoff braking start, taxi speed reached and engine stop.
27. The non-transitory computer readable storage medium of clause 20, further comprising:
   providing a passenger interface to passengers of the aircraft based on the computed aircraft turnaround schedule, wherein the passenger interface comprises a gate number, a sequence number for boarding the aircraft and a time of boarding the aircraft.

## Claims

1. A method for providing an aircraft turnaround schedule, comprising:
obtaining time taken for each aircraft turnaround activity from touchdown to takeoff of an aircraft from an aircraft on-board system by a ground station system; and
computing the aircraft turnaround schedule based on the obtained time taken for each aircraft turnaround activity using a dynamic buffer management approach by the ground station system.

2. The method of claim 1, wherein the time taken for each aircraft turnaround activity at each airport during journey of the aircraft is obtained by the ground station system.

3. The method of claim 1, wherein computing the aircraft turnaround schedule based on the obtained time taken for each aircraft turnaround activity using the dynamic buffer management approach by the ground station system comprises:
determining an additional buffer time involved in each aircraft turnaround activity based on the obtained time taken for each aircraft turnaround activity by the ground station system;
aggregating the determined additional buffer time involved in each aircraft turnaround activity by the ground station system; and
computing the aircraft turnaround schedule by scheduling aircraft turnaround activities along with the aggregated additional buffer time based on the time taken for each aircraft turnaround activity by the ground station system.

4. The method of claim 3, further comprising:
sending the computed aircraft turnaround schedule to the aircraft on-board system by the ground station system.

5. The method of claim 4, further comprising:
dynamically determining a consumption of the aggregated additional buffer time in the aircraft turnaround schedule based on the time taken for each aircraft turnaround activity after landing of the aircraft by the ground station system, wherein the aircraft turnaround schedule is provided to one or more ground handling units by the aircraft on-board system prior to landing;
identifying one or more aircraft turnaround activities in the aircraft turnaround schedule that consume the aggregated additional buffer time by the ground station system;
sending an alert to one or more ground handling units associated with one or more aircraft turnaround activities that consume the aggregated additional buffer time by the ground station system; and
repeating the steps of dynamically determining, identifying and sending for each aircraft turnaround in the journey of the aircraft.

6. The method of claim 5, wherein the one or more aircraft turnaround activities that consume the aggregated additional buffer time are analyzed to improve process of performing the one or more aircraft turnaround activities for subsequent turnarounds of the aircraft.

7. The method of claim 4, further comprising:
estimating a target off-block time (TOBT) for the aircraft based on an estimated time of arrival and the aircraft turnaround schedule prior to landing of the aircraft by the ground station system;
dynamically revising the estimated TOBT for the aircraft based on the actual time of arrival of the aircraft and progress of the aircraft turnaround schedule after arrival of the aircraft by the ground station system; and
alerting the airport based on the revised TOBT by the ground station system.

8. The method of claim 1, wherein the aircraft turnaround activities comprise ground handling activities and aircraft activities, wherein the ground handling activities comprise refueling, cargo door open, cargo door close, toilet drain cycle and portable water filling, and wherein the aircraft activities comprise touchdown, braking start, brake fans start, brake fans stop, braking release, parking brake on, engine stop, aircraft arrival, aircraft docking, aircraft pull away, takeoff braking start, taxi speed reached and engine stop.

9. The method of claim 1, further comprising:
providing a passenger interface to passengers of the aircraft based on the computed aircraft turnaround schedule, wherein the passenger interface comprises a gate number, a sequence number for boarding the aircraft and a time of boarding the aircraft.

10. A system for providing an aircraft turnaround schedule, comprising:
an aircraft on-board system; and
a ground station system communicatively coupled to the aircraft on-board system via a communication network, wherein the ground station system comprises:
a processor;
memory coupled to the processor; and
an aircraft turnaround optimizer residing in the memory, wherein the aircraft turnaround optimizer obtains time taken for each aircraft turnaround activity from touchdown to takeoff of the aircraft from the aircraft on-board system, and wherein the aircraft turnaround optimizer computes the aircraft turnaround schedule based on the obtained time taken for each aircraft turnaround activity using a dynamic buffer management approach.

11. The system of claim 10, wherein the communication network comprises an Internet, an airport Wi-Fi, a mobile network and an in-flight Internet.

12. The system of claim 10, wherein the aircraft turnaround optimizer obtains time taken for each aircraft turnaround activity at each airport during journey of the aircraft.

13. The system of claim 10, wherein the aircraft turnaround optimizer is configured to:
determine an additional buffer time involved in each aircraft turnaround activity based on the obtained time taken for each aircraft turnaround activity;
aggregate the determined additional buffer time involved in each aircraft turnaround activity; and
compute the aircraft turnaround schedule by scheduling aircraft turnaround activities along with the aggregated additional buffer time based on the time taken for each aircraft turnaround activity.

14. The system of claim 13, wherein the aircraft turnaround optimizer sends the computed aircraft turnaround schedule to the aircraft on-board system.

15. The system of claim 14, wherein the aircraft turnaround optimizer is further configured to:
dynamically determine a consumption of the aggregated additional buffer time in the aircraft turnaround schedule based on the time taken for each aircraft turnaround activity after landing of the aircraft, wherein the aircraft turnaround schedule is provided to one or more ground handling units by the aircraft on-board system prior to landing;
identify one or more aircraft turnaround activities in the aircraft turnaround schedule that consume the aggregated additional buffer time;
send an alert to one or more ground handling units associated with one or more aircraft turnaround activities that consume the aggregated additional buffer time; and
repeating the steps of dynamically determining, identifying and sending for each aircraft turnaround in the journey of the aircraft.

16. The system of claim 15, wherein the aircraft turnaround optimizer is further configured to:
estimate a target off-block time (TOBT) for the aircraft based on an estimated time of arrival and the aircraft turnaround schedule prior to landing of the aircraft;
dynamically revise the estimated TOBT for the aircraft based on the actual time of arrival of the aircraft and progress of the aircraft turnaround schedule after arrival of the aircraft; and
alert the airport based on the revised TOBT.

17. A non-transitory computer readable storage medium including instructions that are configured, when executed by a computing device, to provide an aircraft turnaround schedule, the method comprising:
obtaining time taken for each aircraft turnaround activity from touchdown to takeoff of an aircraft from an aircraft on-board system by a ground station system; and
computing the aircraft turnaround schedule based on the obtained time taken for each aircraft turnaround activity using a dynamic buffer management approach by the ground station system.

18. The non-transitory computer readable storage medium of claim 17, wherein the time taken for each aircraft turnaround activity at each airport during journey of the aircraft is obtained by the ground station system.

19. The non-transitory computer readable storage medium of claim 17, wherein computing the aircraft turnaround schedule based on the obtained time taken for each aircraft turnaround activity using the dynamic buffer management approach by the ground station system comprises:
determining an additional buffer time involved in each aircraft turnaround activity based on the obtained time taken for each aircraft turnaround activity by the ground station system;
aggregating the determined additional buffer time involved in each aircraft turnaround activity by the ground station system; and
computing the aircraft turnaround schedule by scheduling aircraft turnaround activities along with the aggregated additional buffer time based on the time taken for each aircraft turnaround activity by the ground station system.
